# EUROPEAN PATENT SPECIFICATION

(11) **EP 3 086 305 B1**
(45) Date of publication and mention of the grant of the patent: **20.11.2019**
(21) Application number: 14872544.3
(22) Date of filing: 22.12.2014
(51) Int. Cl.: G09F 9/00, G02B 1/02, G02B 5/20, H04M 1/02

(54) **ELECTRONIC DEVICE, AND TRANSLUCENT COVER MEMBER FOR ELECTRONIC DEVICE**
ELEKTRONISCHE VORRICHTUNG UND LICHTDURCHLÄSSIGE ABDECKUNG FÜR ELEKTRONISCHE VORRICHTUNG
DISPOSITIF ÉLECTRONIQUE ET ÉLÉMENT DE COUVERCLE TRANSLUCIDE ASSOCIÉ

(30) Priority: 21.12.2013 JP 2013264697
(43) Date of publication of application: 26.10.2016
(73) Proprietor: Kyocera Corporation, Kyoto-shi, Kyoto-fu 612-8501 (JP)
(72) Inventor: UMEHARA, Motohiro, Kyoto-shi Kyoto 612-8501 (JP); MURAKAMI, Shin, Kyoto-shi Kyoto 612-8501 (JP)
(74) Representative: Viering, Jentschura & Partner mbB Patent- und Rechtsanwälte
(86) International application number: PCT/JP2014/083963
(87) International publication number: WO 2015/093620

(56) References cited:
- WO-A1-2008/093704
- CN-A- 103 046 137
- JP-A- H 103 267
- JP-A- 2001 272 513
- JP-A- 2004 075 500
- JP-A- 2005 031 297
- JP-A- 2008 111 984
- JP-A- 2013 053 064
- JP-A- 2013 141 213
- US-A1- 2008 029 147
- US-A1- 2012 212 890

## Description

### Technical Field

The present invention relates to an electronic apparatus and a light-transmissive cover member for electronic apparatus.

### Background Art

In the related art, an electronic apparatus in which a plurality of functional units such as a wireless communication unit and an image display device are housed in a case is used. Recently, a portable electronic apparatus such as a so-called smart phone terminal or a tablet terminal that displays a relatively large image and includes an input device such as a touch panel has begun to rapidly spread. For example, PTL1 discloses a technology related to such a smart phone terminal. For example, so-called strengthened glass made of aluminosilicate glass or the like or a case member made of a resin material is used for an exterior body of the portable electronic apparatus.

### Citation List

### Patent Literature

PTL 1: Japanese Unexamined Patent Application Publication No. 2011-61316

CN 103 046 137 A discloses that a sapphire crystal is doped with carbon and titanium, wherein the doping content of the carbon is 1,000-10,000ppm of the total mass of the crystal, and the doping content of the titanium is 500-3,000ppm of the total mass of the crystal (cf. Abstract).

US 2012/212890 A1 discloses that a cover includes, for example, zirconium dioxide (zirconia), aluminum oxide (alumina), spinel (Al₂MgO₄), YAG (Y₃Al₅O₁₂) and so on, and that the aluminum oxide need not necessarily be a pure substance, but may be a corundum that includes impurities (such as sapphire that includes Fe as the impurity, or ruby that includes Cr as the impurity, for example) (cf. paragraph [0055]).

US 2008/029147 A1 discloses that it was reported that Al oxides formed from Al under oxygen deficient ambient condition were: (i) not pure alumina but with chemical formula, Al₂O_{x<3}, and (ii) light-absorption was strongly dependent on the degree of oxygen deficiency (cf. paragraph [0068]).

### Summary of Invention

### Technical Problem

In recent years, there is growing concern about adverse effects on eyes of an operator due to light emitted from an image display surface of an image display device. Particularly, it is considered that blue visible light to purple visible light referred to as ultraviolet rays, that is, so-called high energy visible light can relatively severely damage the eyes.

In a portable electronic apparatus, a liquid crystal panel has been widely used as an image display device and a backlight unit including an LED lamp has been mainly used for the liquid crystal display panel. Light having a short wavelength of 300 nm or smaller is relatively widely used for the LED lamp. The light having such a short wavelength range has relatively high energy. Since a light-transmissive cover member made of strengthened glass in the related art has a relatively high transmittance of light with high energy in the wavelength range, there is a problem in that light having relatively high energy is incident to the eyes of the operator of the electronic apparatus. Solution to Problem

The present invention provides a light-transmissive cover member according to claim 1, an electronic apparatus according to claim 2, a light-transmissive cover member according to claim 10, an electronic apparatus according to claim 11, and a light-transmissive cover member according to claim 19. Further embodiments of the present invention are described in the dependent claims. Advantageous Effects of Invention

According to the present invention, the intensity of ultraviolet rays or high energy visible light incident to eyes of an operator of an electronic apparatus can be suppressed.

### BRIEF DESCRIPTION OF THE DRAWINGS

Fig. 1A is a perspective view illustrating the external appearance of an electronic apparatus and Fig. 1B is a perspective view schematically illustrating a light-transmissive cover member included in the electronic apparatus illustrated in Fig. 1A;
Fig. 2 is a front view illustrating the external appearance of the electronic apparatus;
Fig. 3 is a rear view illustrating the external appearance of the electronic apparatus;
Fig. 4 is a cross-sectional view illustrating the electronic apparatus;
Fig. 5 is a graph illustrating a relative luminosity factor of a human;
Fig. 6 is a graph illustrating an example of spectral transmittance of the light-transmissive cover member;
Fig. 7 is a graph illustrating an example of spectral transmittance of a light-transmissive cover member of an aspect different from the aspect of Fig. 6;
Fig. 8 is a block diagram illustrating an electrical configuration of the electronic apparatus;
Fig. 9 is a plan view illustrating a piezoelectric vibrating element;
Fig. 10 is a side view illustrating the piezoelectric vibrating element;
Fig. 11 is a view illustrating the piezoelectric vibrating element in a state of being curved;
Fig. 12 is a view illustrating the piezoelectric vibrating element in a state of being curved;
Fig. 13 is a plan view illustrating a light-transmissive cover member; and
Fig. 14 is a view describing an air conduction sound and a conduction sound.

### DESCRIPTION OF EMBODIMENTS

Embodiments will be described with reference to the drawings.

### <External Appearance of Electronic apparatus>

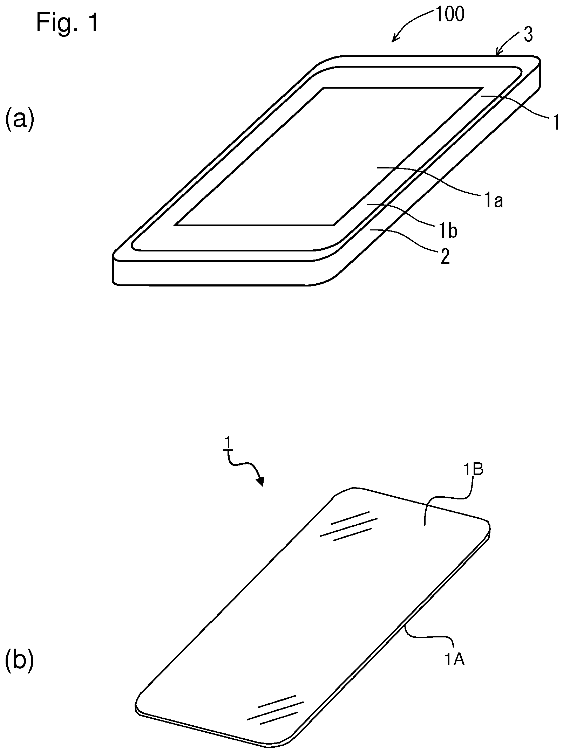

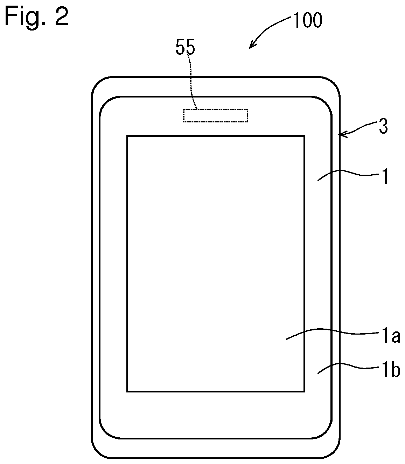

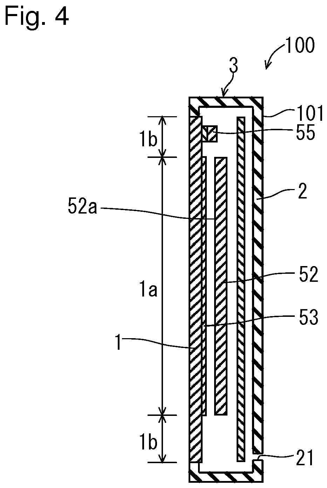

As illustrated in Figs. 1A to 4, the electronic apparatus 100 includes an image display device 52 including the light-transmissive cover member 1, a casing 2, and an image display surface 52a. The light-transmissive cover member 1 is a plate having a substantially rectangular shape in a plan view. An apparatus case 3 is configured by combining the light-transmissive cover member 1 and the casing 2. Such as a so-called cell phone terminal, smart phone terminal or a tablet terminal, it is preferable that an image display surface has a rectangular shape for improving visibility and controllability, and the light-transmissive cover member 1 having a rectangular shape is suitable for these terminals and has broad utility.

The light-transmissive cover member 1 is disposed such that at least part of the light-transmissive cover member 1 faces the image display surface 52a. In a case where the image display surface 52a of the electronic apparatus 100 is planar, a plate-like member including a planar first surface 1A which faces the image display surface 52a may be used for the light-transmissive cover member 1. Further, a plate-like member including a second surface 1B parallel to the first surface 1A may be used for the light-transmissive cover member 1.

The light-transmissive cover member 1 comprises a substrate which is a single crystal body including alumina (Al₂O₃) as a main component. The single crystal of alumina (Al₂O₃) that is generally referred to as sapphire is difficult to be damaged and broken, and has high thermal conductivity and high heat dissipation when compared to strengthened glass or the like.

The light-transmissive means a transmittance is relatively high. For example, a minimum value of a transmittance (%) of light having a wavelength range of 400 nm or more and 760 nm or less is larger than 80 (%). It is known that the single crystal of ideally perfect alumina (Al₂O₃) is colorless and transparent and the transmittance (%) of light having a wavelength of approximately 260 nm is approximately 94% of the transmittance (%) of light having a wavelength of approximately 550 nm. In contrast, in the light-transmissive cover member 1 of the present embodiment, the transmittance (%) of light having a wavelength of approximately 260 nm is smaller than 92% of the transmittance (%) of light having a wavelength of approximately 550 nm. For example, in the case that the transmittance (%) of the light-transmissive cover member 1 of light having a wavelength of 260 nm is 70% and the transmittance (%) of light having a wavelength of 550 nm is 85%, the transmittance (%) of light having a wavelength of 260 nm is 82(= 100 ^{∗} 70 / 85)% of the transmittance (%) of light having a wavelength of 550 nm, so the transmittance (%) of light having a wavelength of 260 nm is less than 92% of the transmittance (%) of light having a wavelength of 550 nm.

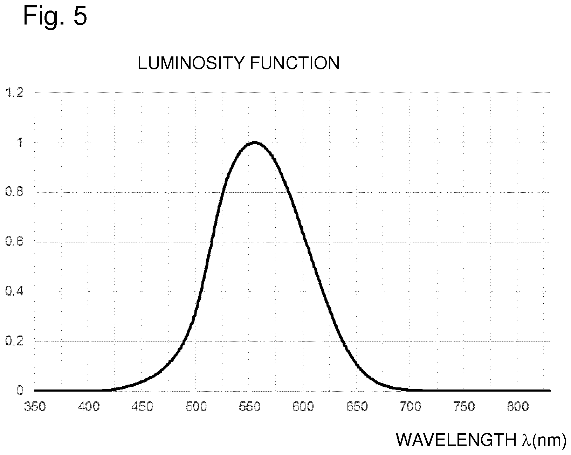

Fig. 5 is a graph illustrating a relative luminosity factor in which intensity of brightness felt by eyes of a human for each wavelength of light is represented by a numerical value. More specifically, the graph illustrated in Fig. 5 represents a CIE standard relative luminosity factor. As illustrated in the graph of the relative luminosity factor of Fig. 5, even in a case of light having the same energy, most people feel light having a wavelength of 550 nm (green) as the brightest and other colors relatively darker than that. The light having a wavelength of approximately 550 nm is substantially green light as the brightest and light having a wavelength of 260 nm is ultraviolet light and is not perceptible to humans. In addition, light having a wavelength range of approximately 500 nm or more and 800 nm or less has a range corresponding to green to red and has a wavelength range with a high relative luminosity factor having a wavelength of approximately 550 nm. Light having a wavelength range of approximately 230 nm or more and 300 nm or less has a range corresponding to ultraviolet rays which are not perceptible to human eyes and blue to purple having a low relative luminosity factor.

Since light having a wavelength range of approximately 230 nm to 300 nm has a low relative luminosity factor, people tend to continuously watch the light unconsciously having high light intensity for a long time, and thus the light damages the eyes of a human unknowingly because the energy is relatively high. The light-transmissive cover member 1 is preferable to prevent a light having a wavelength range of 230 nm to 300 nm from passing through (to have the lower transmittance). In the light-transmissive cover member 1 of the present embodiment, the transmittance of light having a wavelength range with a low relative luminosity factor and high energy is set to be smaller than the transmittance of light having a wavelength range with a high relative luminosity factor and low energy.

That is, the light-transmissive cover member 1 of the present embodiment is sufficiently transmissive and has a relatively suppressed transmittance of light which is a wavelength corresponding to that of ultraviolet rays. In terms of suppressing the transmittance of light having a wavelength corresponding to that of ultraviolet rays, in the light-transmissive cover member, it is preferable that the transmittance (%) of light having a wavelength of 260 nm be smaller than 72% of a transmittance (%) of light having a wavelength of 550 nm and it is more preferable that the transmittance (%) of light having a wavelength of 260 nm be smaller than 50% of the transmittance (%) of light having a wavelength of approximately 550 nm.

In addition, it is known that in case the single crystal of ideally perfect alumina (Al₂O₃), the average value of a transmittance (%) of light having a wavelength range of approximately 230 nm or more and 300 nm or less is approximately 92% to 100% of an average value of a transmittance (%) of light having a wavelength range of approximately 500 nm or more and 800 nm or less. In contrast, in the light-transmissive cover member 1 of the present embodiment, the average value of a transmittance (%) of light having a wavelength range of approximately 230 nm or more and 300 nm or less is less than 92% of an average value of a transmittance (%) of light having a wavelength range of approximately 500 nm or more and 800 nm or less. That is, in the light-transmissive cover member 1 of the present embodiment, the transmittance of light having a wavelength range corresponding to that of ultraviolet rays or high energy rays is relatively suppressed. In a case in which white light is transmitted through the light-transmissive cover member 1 of the present embodiment, the color of the light transmitted through the light-transmissive cover member 1 is more purplish red with respect to the color of light which is incident. In terms of suppressing the transmittance of light having a wavelength corresponding to that of ultraviolet rays more, in the light-transmissive cover member 1, the average value of a transmittance (%) of light having a wavelength range of approximately 230 nm or more and 300 nm or less is preferably smaller than 85% of an average value of a transmittance (%) of light having a wavelength range of approximately 500 nm or more and 800 nm or less. The average value of the transmittance (%) of light having a wavelength range of 230 nm or more and 300 nm or less is an arithmetic average value of the transmittance (%) of each wavelength measured at 2 nm intervals in the wavelength range of 230 nm to 300 nm. The transmittance (%) of each wavelength can be measured using, for example, UV-3100PC (manufactured by Shimadzu Corporation).

The light-transmissive cover member 1 is provided with a display portion 1a on which various pieces of information such as characters, symbols, and figures are displayed. For example, the display portion 1a has a rectangular shape in a plan view. A peripheral edge 1b which surrounds the display portion 1a in the light-transmissive cover member 1 becomes black by a film as the light shielding layer being attached to the substrate and is a non-display portion on which the information is not displayed. A touch panel 53 described below is attached to an inner surface of the light-transmissive cover member 1 and a user can issue various instructions with respect to the electronic apparatus 100 by operating the display portion 1a of the light-transmissive cover member 1 with a finger or the like.

The casing 2 constitutes the peripheral edge of the front surface, the side surface, and the rear surface of the electronic apparatus 100. In the present embodiment, the casing 2 is made of a polycarbonate resin, but a material is not particularly limited as long as the material is a member which covers the electronic apparatus. For example, a material which is the same as that of the light-transmissive cover member 1 may be used.

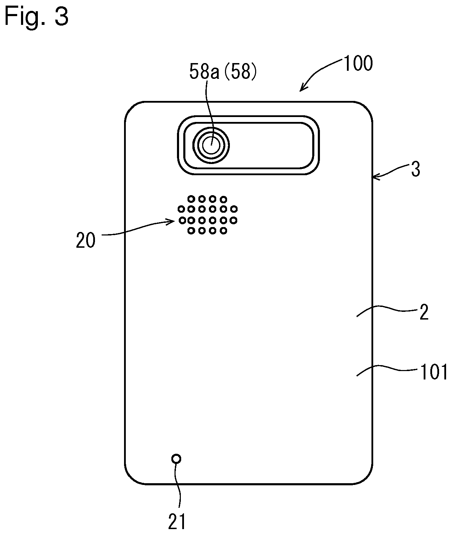

As illustrated in Fig. 3, a speaker hole 20 and a microphone hole 21 are formed on a rear surface 101 of the electronic apparatus 100, that is, the rear surface of the apparatus case 3. Further, an imaging lens 58a including an imaging unit 58 described below is exposed from the rear surface 101 of the electronic apparatus 100.

The image display device 52 is included in the inside of the apparatus case 3 as described above. The image display device 52 is controlled by the control unit 50 described below and displays image information indicating characters, symbols, and figures on the image display surface 52a.

The image display device 52 is a so-called liquid crystal display panel, and has a backlight unit and a liquid crystal layer which are not illustrated in the drawings. As the LED lamp of the backlight unit, an LED lamp emitting white light, in which a luminescent material is mainly combined with a blue LED element, is used. The image information displayed on the image display surface 52a of the image display device 52 is formed by white light, which is emitted from the LED lamp of the backlight unit, is partially colored by being transmitted through the liquid crystal layer included in the image display device 52. That is, while the white light emitted from the LED lamp is transmitted through the liquid crystal layer, the color of the transmitted light is changed by limiting a wavelength range of the light being transmitted for each part and the image information indicating characters, symbols, and figures having various colors and shapes is formed on the image display surface 52a. The light indicating the image information formed on the image display surface 52a in this manner is incident from the first surface 1A of the light-transmissive cover member 1, emits from the second surface 1B, and enters eyes of an operator (user) of the electronic apparatus 100, and the operator recognizes the characters, symbols, and figures indicated by the image information.

In the electronic apparatus 100 including the light-transmissive cover member 1, the above-described image display device 52 is a so-called liquid crystal display panel, and the white light from the backlight contains relatively large amount of light having a wavelength range of approximately 230 nm to 300 nm with relatively high energy. The light-transmissive cover member 1 relatively easily absorbs light having a wavelength range with relatively high energy. Various videos such as operation screens, game images, photos, or moving images are displayed on the image display device 52 and the operator who operates the electronic apparatus 100 tends to watch the image display device 52 for a long time. For example, since light having a wavelength 300 nm or lower with relatively high energy has a low relative luminosity factor, the operator tends to continuously watch the light unconsciously for a long time. The light-transmissive cover member 1 suppresses the amount of light, which is easily incident to eyes of the operator in a large amount, having a wavelength range corresponding to that of ultraviolet rays or high energy visible light so that adverse effects on eyes of the operator can be suppressed.

### <First aspect of light-transmissive cover member>

According to a first aspect of the invention, a single crystal body which composes the light-transmissive cover member including alumina (Al₂O₃) as a main component contains at least one of Co, Ni, Na, Ti, Cr, Fe, and Cu in a total amount of 3x10⁻⁴% by mass or more. In this specification, these elements among Co, Ni, Na, Ti, Cr, Fe, and Cu are described as metal element. Further, it is not need that all elements among Co, Ni, Na, Ti, Cr, Fe, and Cu may not be contained in the single crystal. It is preferable that the light-transmissive cover member contains these metal elements in a total amount of 3x10⁻²% by mass or less for which the strength and transmissive of the light-transmissive cover member is relatively higher.

In addition, it is preferable that the light-transmissive cover member contain at least one of Ti, Fe, and Cu in a total amount of 3x10⁻⁴% by mass or more. It is preferable that the light-transmissive cover member contains at least one of Ti, Fe, and Cu in a total amount of 1x10⁻²% by mass or less for which the strength and transmissive of the light-transmissive cover member is relatively higher. Further, it is not need that all elements among Ti, Fe, and Cu may not be contained in the single crystal. It is known that each of Co, Ni, Na, Ti, Cr, Fe, and Cu are metal elements and sapphire is colored in a case where a small amount of any thereof is contained in the sapphire. The color and the concentration thereof, that is, an absorption spectrum of transmitted light by sapphire is changed due to a combination of the metal elements contained in sapphire and the balance among content ratios of the respective metal elements. In the case where Co, Ni, Na, Ti, Cr, Fe, and Cu are contained in a total amount of 3x10⁻⁴% by mass or more, for example, absorption of light having a wavelength of 300 nm or less becomes higher. Among the transition elements, in a case at least one of Ti, Fe, and Cu, the degree of coloration of sapphire is high. For example, in order to increase absorption of light having a wavelength of 300 nm or less, it is preferable that Ti, Fe, and Cu be contained in a total amount of 3x10⁻⁴% by mass or more. The light-transmissive cover member of the first aspect contains may be composed of approximately 0.5x10⁻⁶% by mass to 1.5x10⁻⁶% by mass of Co, approximately 0.5x10⁻⁵% by mass to 1.5x10⁻⁵% by mass of Ni, approximately 0.5x10⁻⁵% by mass to 1.5x10⁻⁵% by mass of Na, approximately 0.5x10⁻⁴% by mass to 1.5x10⁻⁴% by mass of Ti, approximately 1.5x10⁻⁵% by mass to 2.5x10⁻⁵% by mass of Cr, approximately 1.5x10⁻⁴% by mass to 2.5x10⁻⁴% by mass of Fe, and approximately 0.5x10⁻⁴% by mass to 1.5x10⁻⁴% by mass of Cu. In case it contains several metal elements, it will be able to decrease the transmittance of light having a wavelength of 300nm with high energy despite a content ratio is low.

The content ratios of the metal elements in the single crystal of the light-transmissive cover member 1 can be measured using a glow discharge mass spectrometer. For example, as a measuring device, a double-convergence type GDMS device(VG9000, VG Elemental Inc.) is used for measuring a sample in which sapphire is powdered under the conditions of a discharge power of 1.0 kV and 2.5 mA, a resolution of 4000, and an auxiliary electrode of Ga (6N: 30 mmφ to 1 mmt) .

In a case of using the light-transmissive cover member 1 of the first aspect, ultraviolet rays or high energy visible light incident to eyes of the operator can be effectively suppressed while image information displayed on the image display surface 52a is transparent (less redness) to the degree that the operator does not consider the image information to be exceedingly red.

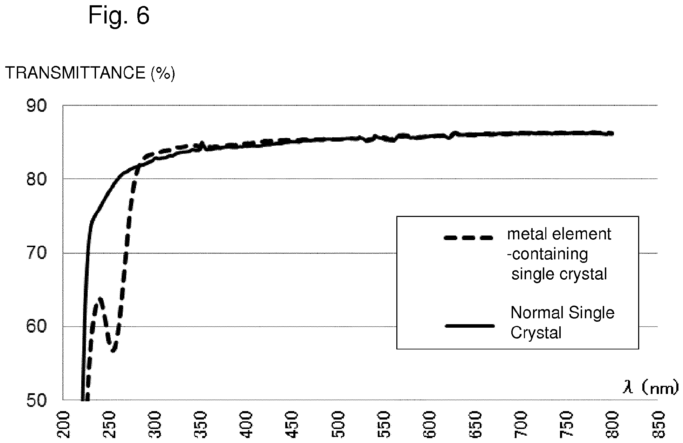

Fig. 6 is a graph illustrating wavelength dispersion of the spectrum transmittance when white light is radiated on the light-transmissive cover member 1 of the first aspect and then transmitted therethrough. The graph of Fig. 6 illustrates the spectrum transmittance of a single crystal body (metal element-containing single crystal body) containing at least one of Co, Ni, Na, Ti, Cr, Fe, and Cu in a total amount of 3x10⁻⁴% by mass or more and an example of a single crystal body (normal single crystal body) containing the metal elements in a total amount of less than 3x10⁻⁴% by mass under the same conditions. More specifically, the single crystal body of the graph illustrated in Fig. 6 contains Ti, Fe, and Cu in a total amount of 3x10⁻⁴% by mass or more. For example, the single crystal body contains, for example, approximately 1x10⁻⁶% by mass of Co, approximately 1x10⁻⁵% by mass of Ni, approximately 1x10⁻⁵% by mass of Na, approximately 1x10⁻⁴% by mass of Ti, approximately 2x10⁻⁵% by mass of Cr, approximately 2x10⁻⁴% by mass of Fe, and approximately 8x10⁻⁵% by mass of Cu.

Fig. 6 is a graph of respective examples obtained by measuring single crystal bodies respectively having a thickness of 4.3 (mm). The spectrum transmittance illustrated in Fig. 6 is data obtained by measuring the transmittance of light respectively having a wavelength of 2 nm using a UV-3100PC (manufactured by Shimadzu Corporation).

As is evident from the graph in Fig. 6, the light-transmissive cover member 1 (metal element-containing single crystal body) of the first aspect has a low transmittance in the wavelength range having a range of the wavelength smaller than that of the visible light and corresponds to that of blue light to ultraviolet rays. That is, while the light from the image display device 52 is transmitted through the light-transmissive cover member 1 of the first aspect, the light-transmissive cover member 1 absorbs a relatively large amount of light in the range containing blue light to ultraviolet rays and having a wavelength range with relatively high energy.

In the example of Fig. 6, in the light-transmissive cover member of the example of the normal single crystal, for example, the transmittance (%) of light having a wavelength of approximately 260 nm is approximately 94% of the transmittance (%) of light having a wavelength of approximately 550 nm. In contrast, in the metal element-containing a single crystal body of the present embodiment, the transmittance (%) of light having a wavelength of 260 nm is 59%, and the transmittance (%) of light having a wavelength of 550 nm is 86%, so the transmittance (%) of light having a wavelength of approximately 260 nm is 69% of the transmittance (%) of light having a wavelength of 550nm, which is a small value. As in the first aspect, the ultraviolet rays or high energy visible light can be sufficiently suppressed using the light-transmissive cover member 1.

In addition, in the example of Fig. 6, in the light-transmissive cover member in the example of the normal single crystal, the average value of a transmittance (%) of light having a wavelength range of approximately 230 nm or more and 300 nm or less is 80 (%), an average value of a transmittance (%) of light having a wavelength range of approximately 500 nm or more and 800 nm or less is 86 (%), and the average value of a transmittance (%) of light having a wavelength range of approximately 230 nm or more and 300 nm or less is approximately 93% of an average value of a transmittance (%) of light having a wavelength range of approximately 500 nm or more and 800 nm or less, which is a relatively large value. In contrast, in the light-transmissive cover member of the metal element-containing a single crystal body, the average value of a transmittance (%) of light having a wavelength range of approximately 230 nm or more and 300 nm or less is 70 (%), an average value of a transmittance (%) of light having a wavelength range of approximately 500 nm or more and 800 nm or less is approximately 86 (%), and the average value of a transmittance (%) of light having a wavelength range of approximately 230 nm or more and 300 nm or less is approximately 81% of an average value of a transmittance (%) of light having a wavelength range of approximately 500 nm or more and 800 nm or less, which is a relatively small value. In the case of using the light-transmissive cover member 1 of the first aspect, which contains metal elements in a relatively large amount, ultraviolet rays or high energy visible light incident to eyes of the operator can be effectively suppressed while the image information displayed on the image display surface 52a is transparent (less redness) to the degree that the operator does not consider the image information to be exceedingly red.

### <Second aspect of light-transmissive cover member>

According to a second aspect of the invention, the single crystal body containing alumina (Al₂O₃) as a main component which compose light-transmissive cover member 1 contains Cr. Cr is one of the metal elements, but Cr can strongly color sapphire red when Cr is contained in sapphire even in small amounts. More specifically, the light-transmissive cover member 1 of the present examples is a single crystal body containing alumina (Al₂O₃) as a main component and contains, for example, 1x10⁻⁵% by mass or more of Cr. The transmitted light of a crystal body allowing the single crystal containing alumina (Al₂O₃) to contain a small amount of Cr is purplish red. When the light-transmissive cover member 1 contains Cr, 1x10⁻⁵% by mass or more of Cr is necessary to be contained in the single crystal. It is preferable that it contains Cr in a total amount of 1x10⁻²% by mass or more for which the strength and transmissive of the light-transmissive cover member is relatively higher. The content ratio of Cr in the light-transmissive cover member 1 can be measured using, for example, the above-described double-convergence type GDMS device (VG9000, VG Elemental Inc.) under conditions the same as the above-described conditions.

Similarly, in the case of using the light-transmissive cover member 1 of the second aspect, ultraviolet rays or high energy visible light incident to eyes of the operator can be effectively suppressed while image information displayed on the image display surface 52a is transparent (less redness) to the degree that the operator does not consider the image information to be exceedingly red.

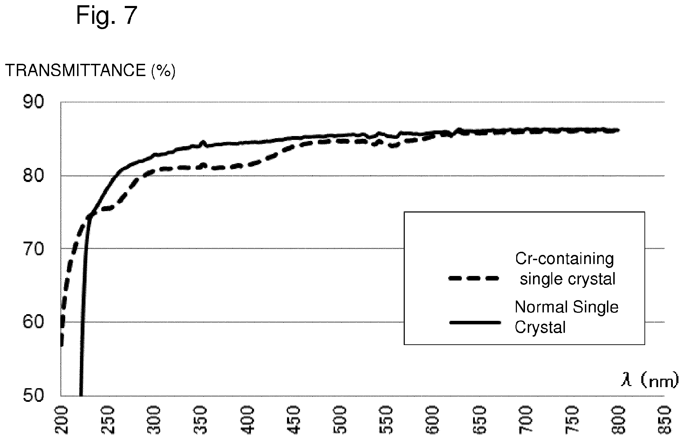

Fig. 7 is a graph illustrating the wavelength dispersion of the spectral transmittance when white light is radiated on the light-transmissive cover member 1 (also referred to as a Cr-containing single crystal body) of the second aspect and then transmitted therethrough. Fig. 7 also illustrates a graph indicating wavelength dispersion values of the spectrum transmittance under the same conditions as in the single crystal (normal single crystal) of alumina (Al₂O₃) containing no Cr for comparison of the light-transmissive cover member 1. The thickness of the normal single crystal illustrated in Fig. 7 is the same as that (4.3 mm) of the light-transmissive cover member 1 of the second aspect. The spectrum transmittance illustrated in Fig. 7 is data obtained by measuring transmittance using a UV-3100PC (manufactured by Shimadzu Corporation). The Cr-containing single crystal body of the graph in Fig. 7 is a single crystal body containing approximately 4x10⁻⁴% by mass of Cr.

In the example of Fig. 7, in the Cr-containing single crystal body, the value of a transmittance (%) of light having a wavelength of 260 nm is 76 (%), and a transmittance (%) of light having a wavelength of 550 nm is 84 (%), and the value of a transmittance (%) of light having a wavelength of 260 nm is 90% of the value of a transmittance (%) of light having a wavelength of 550 nm, which is a relatively small value. In contrast, the average value of a transmittance (%) of light having a wavelength range of 230 nm or more and 300 nm or less is 77 (%), an average value of a transmittance (%) of light having a wavelength range of 500 nm or more and 800 nm or less is 86 (%), and the average value of a transmittance (%) of light having a wavelength range of 230 nm or more and 300 nm or less is 90% of an average value of a transmittance (%) of light having a wavelength range of approximately 500 nm or more and 800 nm or less, which is a relatively small value.

That is, the Cr-containing single crystal body of the second aspect has a low transmittance in the wavelength range corresponding to that of blue light to ultraviolet rays which have a wavelength range smaller than that of visible light. That is, while the light from the image display device 52 is transmitted through the light-transmissive cover member 1, the light-transmissive cover member 1 absorbs a relatively large amount of light in the range containing blue light to ultraviolet rays with relatively high energy.

In the transparent crystal body containing a single crystal of alumina (Al₂O₃) as a main component, redness is stronger as the content ratio of Cr is larger, and the redness of light to be transmitted is stronger as the thickness thereof is greater (thicker). It is preferable that the light-transmissive cover member formed of a transparent crystal body containing a single crystal of alumina (Al₂O₃) as a main component contain 5x10⁻⁴% by mass or more of Cr and the thickness in a direction perpendicular to the first surface be smaller than 1 mm for reducing the high energy visible light. Further, in case it is allow the thickness being able to be relatively larger, it is more preferable that the content ratio of Cr be smaller than 5x10⁻⁴% by mass and the thickness in the direction perpendicular to the first surface be 1 mm or more.

### <Third aspect of light-transmissive cover member>

According to a third aspect, the substrate which composes the light-transmissive cover member 1 contains alumina (Al₂O₃) whose content ratio of oxygen is smaller than the chemical equivalent as a main component. The ideal chemical formula of the single crystal body of alumina is Al₂O₃, but the single crystal body which is represented by Al₂O₃₋ₓ and whose content ratio of oxygen is smaller than the chemical equivalent (oxygen-deficient single crystal) can be grown by adjusting conditions of the atmosphere and the like at the time of growth of the single crystal body. The single crystal body whose content ratio of oxygen is smaller than the chemical equivalent has an energy level which relatively largely absorbs the light having a wavelength range of approximately 230 nm or more and 300 nm or less.

Specifically, in an oxygen-deficient single crystal body, the transmittance (%) of light having a wavelength of 260 nm is approximately 70%, the transmittance (%) of light having a wavelength of 550 nm is approximately 85%, and the transmittance (%) of light having a wavelength of 260 nm is approximately 82% of the transmittance (%) of light having a wavelength of approximately 550 nm, which is a small value. In addition, the transmittance (%) of light having a wavelength of 260 nm is smaller than 92% of the transmittance (%) of light having a wavelength of approximately 550 nm, which is a small value. Further, the average value of a transmittance (%) of light having a wavelength range of approximately 230 nm or more and 300 nm or less is smaller than 92 (%) of an average value of a transmittance (%) of light having a wavelength range of approximately 500 nm or more and 800 nm or less. In the case of using the light-transmissive cover member 1, light having relatively high energy incident to eyes of the operator can be effectively suppressed while the image information displayed on the image display surface 52a is transparent (less redness) to the degree that the operator does not consider the image information to be exceedingly red.

The expression "whose content ratio of oxygen is smaller than the chemical equivalent" means that the ratio of the mass of oxygen (O) to the mass of aluminum (Al) in sapphire, measured using a mass spectrometer, is less than 90%. The chemical formula of sapphire, which is a single crystal of alumina, is Al₂O₃, and the ratio of the mass of oxygen (O) to the mass of aluminum (Al) in the ideal sapphire is 92.3%. The oxygen-deficient single crystal body has a small content ratio of oxygen, and the ratio of the mass of oxygen (O) to the mass of aluminum (Al) in the oxygen-deficient single crystal body is less than or equal to 90%. These masses of aluminum and oxygen can be measure using, for example, a thermogravimetric analyzer or the like. It is known that when a single crystal body which is represented by Al₂O₃₋ₓ and whose content ratio of oxygen is smaller than the chemical equivalent (oxygen-deficient single crystal body) is heated to a high temperature in an oxidation atmosphere, oxygen atoms are taken into oxygen deficiency, reducing the oxygen deficiency. That is, the heating process causes oxygen to be taken into such an oxygen-deficient single crystal body in an amount corresponding to the amount of the oxygen deficiency before the heating process, and as a result, the mass of the single crystal body increases after the heating process by the taken amount of oxygen. With this increase considered as a mass equivalent to x in the chemical formula Al₂O₃₋ₓ, the mass of aluminum (Al) and the mass of oxygen (O) before the heating process can be obtained by using this increase and the mass after the heating process, and thus, the ratio of the mass of oxygen (O) to the mass of aluminum (Al) can be obtained. Such sapphire with high light transmissivity as used for light-transmissive cover members is such that the masses of the other impurity elements contained in the sapphire are so small as to be negligible compared to the masses of aluminum (Al) and oxygen (O). For this reason, even when the total masses before and after the heating process are each considered as the mass of Al₂O₃, the ratio of the mass of oxygen (O) to the mass of aluminum (Al) can be obtained with sufficient accuracy. The thermogravimetric analysis may be performed, for example, using the thermogravimetric analyzer: TG/TA3000 manufactured by Seiko Instruments & Electronics Ltd., to measure the mass of a sample of pulverized sapphire before and after the heating process. The heating process may be performed to increase the temperature from room temperature to 1000°C at 5°C/min., and the mass one hour after the temperature reaches 1000°C may be measured as the mass after the heating process. As the degree of deficiency of oxygen, that is, the degree of divergence from the actual chemical equivalence of oxygen is larger, the redness of the light-transmissive cover member made of the sapphire increases.

The single crystal body of the light-transmissive cover member 1 according to the first aspect can be obtained by adding a small amount of metal element materials to an alumina (Al₂O₃) material, which is a raw material at the time of growth of the single crystal body. The single crystal body of the light-transmissive cover member 1 according to the second aspect can be obtained by adding a small amount of Cr to an alumina (Al₂O₃) material, which is a raw material at the time of growth of the single crystal body. The single crystal body of the light-transmissive cover member 1 according to the third aspect can be obtained by adjusting the ambient atmosphere at the time of growth of the single crystal body, to relatively reduce the oxygen component in the ambient atmosphere. The single crystal body of each aspect can be formed also by adjusting the materials and the ambient atmosphere at the time of growth of the single crystal body, or for example, may be formed by adjusting the growth speed of the single crystal body, the temperature condition at the time of growth, or the like to adjust the amount of impurities to be melt into the single crystal body.

### <Electrical configuration of electronic apparatus>

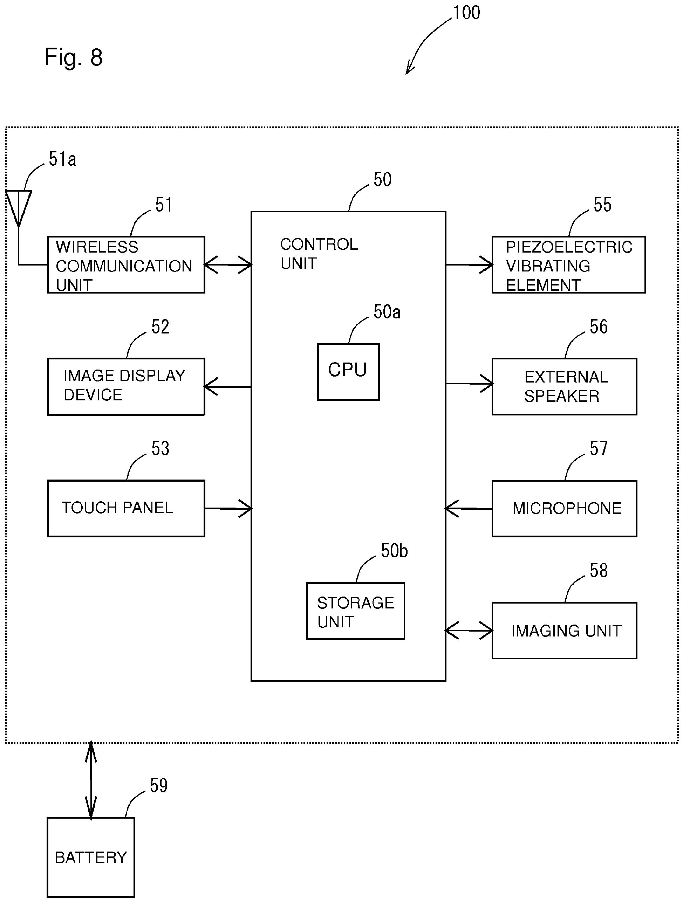

Fig. 8 is a block diagram illustrating an electrical configuration of an electronic apparatus 100. As illustrated in Fig. 8, the electronic apparatus 100 includes the control unit 50, a wireless communication unit 51, the image display device 52, the touch panel 53, a piezoelectric vibrating element 55, an external speaker 56, a microphone 57, an imaging unit 58, and a battery 59, and these constituent elements are arranged in the apparatus case 3.

The control unit 50 includes a CPU 50a and a storage unit 50b and manages overall operations of the electronic apparatus 100 by controlling other configuration elements of the electronic apparatus 100. The storage unit 50b is configured of a ROM and a RAM. Various functional blocks are formed in the control unit 50 by the CPU 50a executing various programs in the storage unit 50b.

The wireless communication unit 51 receives a signal from a communication device such as a web server connected to the Internet or a mobile phone and separate from the electronic apparatus 100 using an antenna 51a via a base station. The wireless communication unit 51 performs an amplification process and down conversion on the received signal and outputs the signal to the control unit 50. The control unit 50 performs demodulation processing or the like on the input received signal and acquires a sound signal indicating a voice or music included in the received signal. Further, the wireless communication unit 51 performs up-converting and the amplification process on a transmission signal including a sound signal or the like generated in the control unit 50, and transmits the transmission signal after the process from the antenna 51a in a wireless manner. The transmission signal from the antennal 51a is received in a communication device connected to the Internet or a mobile phone and separate from the electronic apparatus 100 via the base station.

The image display device 52 is, for example, a liquid crystal image display device as described above and displays various pieces of information such as characters, signals, and figures on the image display surface 52a by being controlled by the control unit 50. The information displayed on the image display device 52 can be recognized by the user of the electronic apparatus 100 by being displayed on the display portion 1a of the light-transmissive cover member 1.

The touch panel 53 is, for example, a projection type electrostatic capacitance touch panel and detects an operation of the user with respect to the display portion 1a of the light-transmissive cover member 1. The touch panel 53 is attached to the inner surface of the light-transmissive cover member 1 and includes two sheet-like electrode sensors which are disposed so as to face each other. Two electrode sensors are bonded to each other using a transparent adhesive sheet.

A plurality of long and narrow X electrodes which respectively extend along an X-axis direction (for example, a lateral direction of the electronic apparatus 100) and are disposed in parallel with each other are formed in one electrode sensor. A plurality of long and narrow Y electrodes which respectively extend along a Y-axis direction (for example, a vertical direction of the electronic apparatus 100) and are disposed in parallel with each other are formed in another electrode sensor. When a finger of the user is touches the display portion 1a of the light-transmissive cover member 1, the electrostatic capacitance between an X electrode and a Y electrode positioned below the touched portion is changed so that the operation on the display portion 1a of the light-transmissive cover member 1 in the touch panel 53 is detected. The change in the electrostatic capacitance between the X electrode and the Y electrode, which is generated in the touch panel 53, is transmitted to the control unit 50, and the control unit 50 specifies the content of the operation performed on another surface 1B of the light-transmissive cover member 1 based on the change in the electrostatic capacitance and performs an operation according to the specified contents.

The piezoelectric vibrating element 55 is an element for transmitting a reception sound to the user of the electronic apparatus 100. The piezoelectric vibrating element 55 is vibrated by a driving voltage applied from the control unit 50. The control unit 50 generates a driving voltage based on a sound signal indicating the reception sound and applies the driving voltage to the piezoelectric vibrating element 55. The piezoelectric vibrating element 55 is vibrated by the control unit 50 based on the sound signal indicating the reception sound and thus the reception sound is transmitted to the user of the electronic apparatus 100. In this manner, the control unit 50 functions as a driving unit allowing the piezoelectric vibrating element 55 to vibrate based on the sound signal. The piezoelectric vibrating element 55 will be described below in detail.

The external speaker 56 outputs the electric sound signal from the control unit 50 by converting the sound signal into a sound. The sound output from the external speaker 56 is output to the outside from speaker holes 20 provided on the rear surface 101 of the electronic apparatus 100.

The microphone 57 outputs the sound input from the outside of the electronic apparatus 100 to the control unit 50 by converting the sound into an electrical sound signal. The sound from the outside of the electronic apparatus 100 is incorporated in the electronic apparatus 100 from microphone holes 21 provided on the rear surface 101 of the electronic apparatus 100 and is input to the microphone 57.

The imaging unit 58 is configured of the imaging lens 58a, an imaging element, and the like, and images a still image and a moving image based on the control by the control unit 50.

The battery 59 outputs power of the electronic apparatus 100. The power output from the battery 59 is supplied with respect to the respective electronic components contained in the control unit 50 or the wireless communication unit 51 included in the electronic apparatus 100.

Further, the case where the image display device 52 is a so-called liquid crystal display panel is described in the present embodiment, but the image display device is not particularly limited thereto. For example, a liquid crystal display device including a so-called fluorescent lamp as a backlight unit and other kinds of image display devices such as a so-called organic EL device and the like may be used. Since the light emitted from other image display devices contains so-called high energy visible light having a wavelength of approximately 380 nm to 400 nm which is close to blue in color, the light-transmissive cover member 1 suppresses the amount of light having a wavelength range corresponding to that of high energy visible light incident to the eyes of the operator so that adverse effects on eyes of the operator are suppressed in this case.

### <Details of piezoelectric vibrating element>

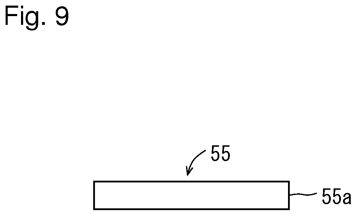

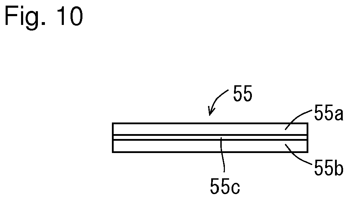

Figs. 9 and 10 are respectively a top view and a side view illustrating a structure of the piezoelectric vibrating element 55. As illustrated in Figs. 9 and 10, the piezoelectric vibrating element 55 has a long shape in one direction. Specifically, the piezoelectric vibrating element 55 has a long and narrow rectangular plate shape in a plan view. The piezoelectric vibrating element 55 has, for example, a bimorph structure and includes a first piezoelectric ceramic plate 55a and a second piezoelectric ceramic plate 55b which are attached to each other through a sim material 55c.

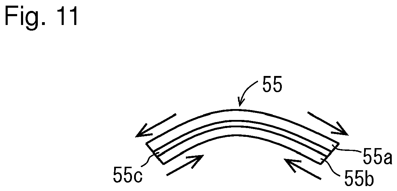

In the piezoelectric vibrating element 55, when a positive voltage is applied to the first piezoelectric ceramic plate 55a and a negative voltage is applied to the second piezoelectric ceramic plate 55b, the first piezoelectric ceramic plate 55a extends along the longitudinal direction and the second piezoelectric ceramic plate 55b contracts along the longitudinal direction. Accordingly, as illustrated in Fig. 11, the piezoelectric vibrating element 55 is bent into a convex shape with the first piezoelectric ceramic plate 55a being outside.

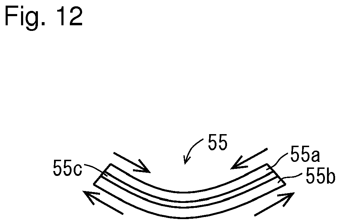

In contrast, in the piezoelectric vibrating element 55, when a negative voltage is applied to the first piezoelectric ceramic plate 55a and a positive voltage is applied to the second piezoelectric ceramic plate 55b, the first piezoelectric ceramic plate 55a contracts along the longitudinal direction and the second piezoelectric ceramic plate 55b extends along the longitudinal direction. Accordingly, as illustrated in Fig. 12, the piezoelectric vibrating element 55 is bent into a convex shape with the second piezoelectric ceramic plate 55b being outside.

The piezoelectric vibrating element 55 is bent and vibrates by alternatively taking the state of Fig. 11 and the state of Fig. 12. The control unit 50 allows the piezoelectric vibrating element 55 to be bent and vibrate by applying an AC voltage in which the positive voltage and the negative voltage alternatively appear at an area between the first piezoelectric ceramic plate 55a and the second piezoelectric ceramic plate 55b.

In addition, only one structure made of the first piezoelectric ceramic plate 55a and the second piezoelectric ceramic plate 55b which are bonded to each other by interposing the sim material 55c therebetween is provided in the piezoelectric vibrating element 55 illustrated in Figs. 10 to 12, but a plurality of the structures may be laminated to each other.

### <Arrangement position of piezoelectric vibrating element>

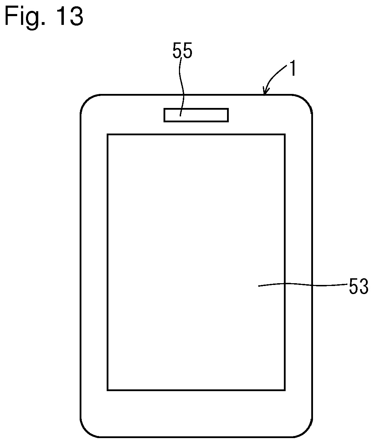

Fig. 13 is a plan view when the light-transmissive cover member 1 is seen from the first surface 1A side. The piezoelectric vibrating element 55 is attached to the first surface 1A of the light-transmissive cover member 1 using an adhesive such as a double-sided tape. The piezoelectric vibrating element 55 is arranged in a position which is not overlapped with the image display device 52 and the touch panel 53 when the light-transmissive cover member 1 is seen from the first surface 1A side in a plan view in the first surface 1A of the light-transmissive cover member 1.

### <Regarding generation of reception sound due to vibration of piezoelectric vibrating element>

In the present embodiment, an air conduction sound and a conduction sound are transmitted to the user from the light-transmissive cover member 1 by the piezoelectric vibrating element 55 allowing the light-transmissive cover member 1 to vibrate. That is, the vibration of the piezoelectric vibrating element 55 is transmitted to the light-transmissive cover member 1 so that the air conduction sound and the conduction sound are transmitted to the user from the light-transmissive cover member 1.

Here, the term "air conduction sound" means a sound recognized in a human brain by the vibration of an eardrum due to a sound wave (air vibration) which enters an external auditory meatus hole (a so-called "ear hole"). On the other hand, the term "conduction sound" is a sound recognized in a human brain by the vibration of the eardrum due to the vibration of an auricle transmitted to the eardrum after the auricle is vibrated. Hereinafter, the air conduction sound and the conduction sound will be described in detail.

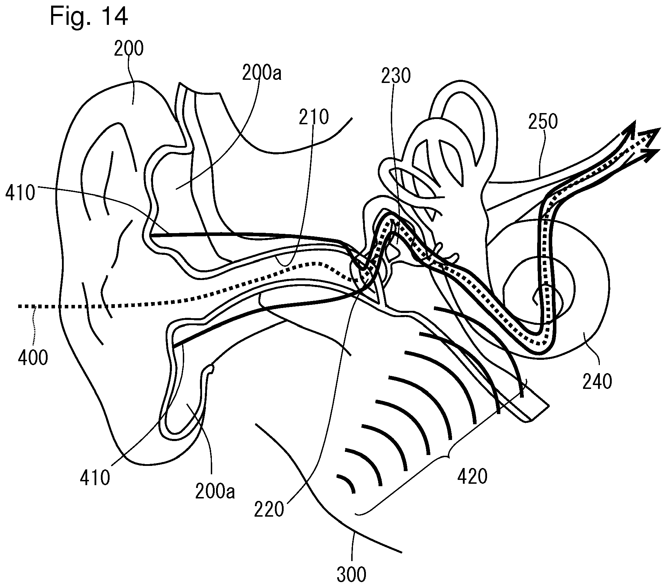

Fig. 14 is a view for describing the air conduction sound and the conduction sound. Fig. 14 illustrates a structure of an ear of the user of the electronic apparatus 100. In Fig. 14, a wavy line 400 indicates a conduction path of a sound signal (sound information) while the air conduction sound is recognized in the brain and a solid line 410 indicates the conduction path of the sound signal while the conduction sound is recognized in the brain.

When the piezoelectric vibrating element 55 mounted to the light-transmissive cover member 1 vibrates based on the electric sound signal indicating the reception sound, the light-transmissive cover member 1 vibrates and a sound wave is output from the light-transmissive cover member 1. When the user moves the light-transmissive cover member 1 of the electronic apparatus 100 close to an auricle 200 of the user by holding the electronic apparatus 100 in a hand or the light-transmissive cover member 1 of the electronic apparatus 100 is set against the auricle 200 of the user, the sound wave output from the light-transmissive cover member 1 enters an external auditory meatus hole 210. The sound wave from the light-transmissive cover member 1 advances in the external auditory meatus hole 210 and allows the eardrum 220 to vibrate. The vibration of the eardrum 220 is transmitted to au auditory ossicle 230 and the auditory ossicle 230 vibrates. In addition, the vibration of the auditory ossicle 230 is transmitted to a cochlea 240 and is converted into an electrical signal in the cochlea 240. The electrical signal is transmitted to the brain by passing through an acoustic nerve 250 and the reception sound is recognized in the brain. In this manner, the air conduction sound is transmitted from the light-transmissive cover member 1 to the user.

Further, when the user sets the light-transmissive cover member 1 of the electronic apparatus 100 against the auricle 200 of the user by holding the electronic apparatus 100 in a hand, the auricle 200 is vibrated by the light-transmissive cover member 1 which is vibrated by the piezoelectric vibrating element 55. The vibration of the auricle 200 is transmitted to the eardrum 220, and thus the eardrum 220 vibrates. The vibration of the eardrum 220 is transmitted to the auditory ossicle 230, and thus the auditory ossicle 230 vibrates. In addition, the vibration of the auditory ossicle 230 is transmitted to the cochlea 240 and is converted into an electrical signal in the cochlea 240. The electrical signal is transmitted to the brain by passing through the acoustic nerve 250 and the reception sound is recognized in the brain. In this manner, the conduction sound is transmitted from the light-transmissive cover member 1 to the user. Fig. 13 illustrates an auricular cartilage 200a in the inside of the auricle 200.

In addition, the conduction sound herein is different from a bone conduction sound (also referred to as a "bone conduction sound"). The bone conduction sound is a sound recognized in a human brain by the vibration of the skull and direct stimulation of the inner ear such as the cochlea caused by the vibration of the skull. In Fig. 14, in a case of vibrating the jawbone 300, the transmission path of the sound signal while the bone conduction sound is recognized in the brain is indicated with a plurality of arcs 420.

In this manner, in the electronic apparatus 100 according to the present embodiment of the present invention, the air conduction sound and the conduction sound can be transmitted from the light-transmissive cover member 1 to the user of the electronic apparatus 100 by allowing the light-transmissive cover member 1 of the front surface to appropriately vibrates through the piezoelectric vibrating element 55. The structure of the piezoelectric vibrating element 55 according to the present embodiment is designed such that the air conduction sound and the conduction sound can be appropriately transmitted to the user. Various advantages are generated by constituting the electronic apparatus 100 such that the air conduction sound and the conduction sound can be transmitted to the user.

For example, since the user can hear a sound when the user sets the light-transmissive cover member 1 against an ear, the communication using a telephone can be performed without concerning the position of the electronic apparatus 100 set against an ear so much.

In addition, in a case where there is a large amount of ambient noise, it is possible to increase the volume of the conduction sound and to make difficult for the ambient noise to be heard by the user by strongly pressing the ear against the light-transmissive cover member 1. Accordingly, the user can appropriately perform communication using a telephone even when there is a large amount of the ambient noise.

In addition, even in a state in which earplugs or earphones are fixed to the ears of the user, the reception sound from the electronic apparatus 100 can be recognized by putting the light-transmissive cover member 1 against the ear (more specifically the auricle). Further, even in the state in which headphones are fixed to the ears of the user, the reception sound from the electronic apparatus 100 can be recognized by setting the light-transmissive cover member 1 against the headphones.

### <Regarding holes of ear piece (holes for receiver)>

In electronic apparatus such as a mobile phone, holes of the ear piece are made on the light-transmissive cover member 1 of the front surface in some cases for extracting a sound output from a receiver (speaker for receiving a voice) provided in the inside of the electronic apparatus to the outside the electronic apparatus.

In the electronic apparatus 100 according to the present embodiment, since the reception sound is generated by the vibration of the light-transmissive cover member 1, the reception sound can be appropriately transmitted to the user even through there are no holes in the ear piece of the electronic apparatus 100. The light-transmissive cover member 1 is a single crystal body which contains alumina (Al₂O₃) as a main component, and extremely hard when compared to strengthened glass or the like. In addition, resistance to various chemicals is also significantly high. When the single crystal body which contains alumina (Al₂O₃) as a main component is processed to perform processing of opening holes of the ear piece, production cost becomes relatively high because an expensive production apparatus such as a laser processing apparatus becomes necessary or the time required for the processing becomes longer. Since the light-transmissive cover member 1 of the present embodiment has no holes in the ear piece, the cost for the hole processing is not necessary and the production cost of the electronic apparatus 100 is low. Further, since the light-transmissive cover member 1 has no holes in the ear piece, the strength of the light-transmissive cover member 1 is maintained to be relatively high. Furthermore, in the present embodiment, since there are no holes of the ear piece on the surface of the electronic apparatus 100, problems of water or dust entering the holes of the ear piece are not generated. Therefore, since a water-proof structure or a dust-proof structure for solving the above-described problem becomes unnecessary in the electronic apparatus 100, further reduction in the cost of the electronic apparatus 100 can be realized.

Further, in the above-described example, a case of a mobile phone to which the present invention is applied is described as an example, but the present invention can be applied to an electronic apparatus other than the mobile phone. For example, the present invention can be applied to a game machine, a laptop computer, a portable navigation system, and the like. In addition, the present invention is not limited to the above-described embodiments, and various modifications and changes may be made in the range not departing from the scope of the present invention. Reference Signs List.

- 1: light-transmissive cover member
- 1A: first surface
- 1B: second surface
- 50: control unit
- 52: image display device
- 52a: image display surface
- 53: touch panel
- 55: piezoelectric vibrating element
- 100: electronic apparatus

## Claims

1. A light-transmissive cover member (1) for electronic apparatus (100), comprising:a single crystal body containing alumina (Al2 O3) as a main component,wherein the single crystal contains at least one of Co, Ni, Na, Ti, Cr, Fe, and Cu in a total amount of 3x10-4 % to 3x10-2 % by mass, and of the single crystal body, a transmittance (%) of light having a wavelength of 260 nm is smaller than 92% of a transmittance (%) of light having a wavelength of a 550 nm.

2. An electronic apparatus (100), comprising:
an image display device (52) that includes an image display surface (52a); and
a light-transmissive cover member (1) according to claim 1, that is disposed such that at least part of the light-transmissive cover member (1) faces the image display surface (52a).

3. The electronic apparatus (100) according to claim 2, wherein the single crystal body, a transmittance (%) of light having a wavelength of 260 nm is smaller than 72% of a transmittance (%) of light having a wavelength of 550 nm.

4. The electronic apparatus (100) according to claim 2, wherein the single crystal body, a transmittance (%) of light having a wavelength of 260 nm is smaller than 50% of a transmittance (%) of light having a wavelength of 550 nm.

5. The electronic apparatus (100) according to any one of claims 2 to 4, wherein the single crystal body, an average value of a transmittance (%) of light having a wavelength range of 230 nm or more and 300 nm or less is smaller than 92% of an average value of a transmittance (%) of light having a wavelength range of 500 nm or more and 800 nm or less.

6. The electronic apparatus (100) according to any one of claims 2 to 5, wherein the single crystal body, an average value of a transmittance (%) of light having a wavelength range of approximately 230 nm or more and 300 nm or less is smaller than 85% of an average value of a transmittance (%) of light having a wavelength range of approximately 500 nm or more and 800 nm or less.

7. The electronic apparatus (100) according to any one of claims 2 to 6, wherein the single crystal body contains at least one of Ti, Fe, and Cu in a total amount of 3x10⁻⁴% by mass or more.

8. The electronic apparatus (100) according to any one of claims 2 to 7, wherein the single crystal body contains Cr.

9. The electronic apparatus (100) according to claim 8, which contains Cr in an amount of 5x10⁻⁴% by mass or more, and a thickness in a direction perpendicular to a first surface (1A) is smaller than 1 mm.

10. A light-transmissive cover member (1) for electronic apparatus (100), comprising:a single crystal body containing alumina (Al2 O3) as a main component,wherein the alumina whose content ratio of oxygen is smaller than a chemical equivalent, and of the single crystal body, a transmittance (%) of light having a wavelength of 260 nm is smaller than 92% of a transmittance (%) of light having a wavelength of a 550 nm.

11. An electronic apparatus (100), comprising:
an image display device (52) that includes an image display surface; and
a light-transmissive cover member (1) according to claim 10, that is disposed such that at least part of the light-transmissive cover member (1) faces the image display surface.

12. The electronic apparatus (100) according to any one of claims 2 to 9 or 11, wherein the image display surface is planar, and the light-transmissive cover member (1) is a plate-like member that includes a planar first surface facing the image display surface.

13. The electronic apparatus (100) according to any one of claims 2 to 9, 11 or 12 wherein the light-transmissive cover member (1) has a rectangular shape in a plan view.

14. The electronic apparatus (100) according to any one of claims 2 to 9 or 11 to 13 wherein the image display device (52) is a liquid crystal display device or organic EL device.

15. The electronic apparatus (100) according to any one of claims 2 to 9 or 11 to 14, further comprising a piezoelectric vibrating element (55) provided on the light-transmissive cover member (1).

16. The electronic apparatus (100) according to claim 15, wherein the piezoelectric vibrating element (55) is vibrated by a driving voltage based on a sound signal.

17. The electronic apparatus (100) according to one of claims 15 or 16, wherein the light-transmissive cover member (1) is a plate having a substantially long rectangular shape in a plan view.

18. The electronic apparatus (100) according to any one of claims 15 to 17, wherein the piezoelectric vibrating element (55) is arranged in a position which is not overlapped with the image display device (52).

19. A light-transmissive cover member (1) for electronic apparatus (100), comprising:
a single crystal body containing alumina (Al₂O₃) as a main component,
wherein the single crystal contains at least one of Co, Ni, Na, Ti, Cr, Fe, and Cu in a total amount of 3x10⁻⁴% to 3x10⁻²% by mass, and
of the single crystal body, an average value of a transmittance (%) of light having a wavelength range of 230 nm or more and 300 nm or less is smaller than 92% of an average value of a transmittance (%) of light having a wavelength range of 500 nm or more and 800 nm or less.

## Patentansprüche

1. Ein lichtdurchlässiges Abdeckelement (1) für eine elektronische Vorrichtung (100), aufweisend: einen Einkristallkörper, der Aluminiumoxid (Al₂O₃) als einen Hauptbestandteil enthält, wobei der Einkristall mindestens eines von Co, Ni, Na, Ti, Cr, Fe und Cu in einer Gesamtmenge von 3x10⁻⁴ bis 3x10⁻² Masse-% enthält, und wobei ein Transmissionsgrad (%) von Licht mit einer Wellenlänge von 260 nm, des Einkristallkörpers, kleiner als 92 % eines Transmissionsgrades (%) von Licht mit einer Wellenlänge von 550 nm ist.

2. Eine elektronische Vorrichtung (100), aufweisend:
eine Bildanzeigevorrichtung (52), die eine Bildanzeigefläche (52a) aufweist, und
ein lichtdurchlässiges Abdeckelement (1) gemäß Anspruch 1, das derart angeordnet ist, dass zumindest ein Teil des lichtdurchlässigen Abdeckelements (1) der Bildanzeigefläche (52a) zugewandt ist.

3. Die elektronische Vorrichtung (100) gemäß Anspruch 2,
wobei bei dem Einkristallkörper ein Transmissionsgrad (%) von Licht mit einer Wellenlänge von 260 nm kleiner als 72% eines Transmissionsgrades (%) von Licht mit einer Wellenlänge von 550 nm ist.

4. Die elektronische Vorrichtung (100) gemäß Anspruch 2,
wobei bei dem Einkristallkörper ein Transmissionsgrad (%) von Licht mit einer Wellenlänge von 260 nm kleiner als 50% eines Transmissionsgrades (%) von Licht mit einer Wellenlänge von 550 nm ist.

5. Die elektronische Vorrichtung (100) gemäß irgendeinem der Ansprüche 2 bis 4,
wobei bei dem Einkristallkörper ein Durchschnittswert eines Transmissionsgrades (%) von Licht mit einem Wellenlängenbereich von 230 nm oder mehr und 300 nm oder weniger kleiner als 92% eines Durchschnittswerts eines Transmissionsgrades (%) von Licht mit einem Wellenlängenbereich von 500 nm oder mehr und 800 nm oder weniger ist.

6. Die elektronische Vorrichtung (100) gemäß irgendeinem der Ansprüche 2 bis 5,
wobei bei dem Einkristallkörper ein Durchschnittswert eines Transmissionsgrades (%) von Licht mit einem Wellenlängenbereich von etwa 230 nm oder mehr und 300 nm oder weniger kleiner als 85% eines Durchschnittswerts eines Transmissionsgrades (%) von Licht mit einem Wellenlängenbereich von etwa 500 nm oder mehr und 800 nm oder weniger ist.

7. Die elektronische Vorrichtung (100) gemäß irgendeinem der Ansprüche 2 bis 6,
wobei der Einkristallkörper mindestens eines von Ti, Fe und Cu in einer Gesamtmenge von 3x10⁻⁴ Masse-% oder mehr enthält.

8. Die elektronische Vorrichtung (100) gemäß irgendeinem der Ansprüche 2 bis 7,
wobei der Einkristallkörper Cr enthält.

9. Die elektronische Vorrichtung (100) gemäß Anspruch 8,
die Cr in einer Menge von 5x10⁻⁴ Masse-% oder mehr enthält, und
wobei eine Dicke in einer Richtung senkrecht zu einer ersten Oberfläche (1A) kleiner als 1 mm ist.

10. Ein lichtdurchlässiges Abdeckelement (1) für eine elektronische Vorrichtung (100), aufweisend: einen Einkristallkörper, der Aluminiumoxid (Al₂O₃) als einen Hauptbestandteil enthält, wobei der Sauerstoff-Gehaltsanteil des Aluminiumoxids kleiner als ein chemisches Äquivalent ist, und wobei bei dem Einkristallkörper ein Transmissionsgrad (%) von Licht mit einer Wellenlänge von 260 nm kleiner als 92% eines Transmissionsgrades (%) von Licht mit einer Wellenlänge von 550 nm ist.

11. Eine elektronische Vorrichtung (100), aufweisend:
eine Bildanzeigevorrichtung (52), die eine Bildanzeigefläche aufweist, und
ein lichtdurchlässiges Abdeckelement (1) gemäß Anspruch 10, das derart angeordnet ist, dass zumindest ein Teil des lichtdurchlässigen Abdeckelements (1) der Bildanzeigefläche zugewandt ist.

12. Die elektronische Vorrichtung (100) gemäß irgendeinem der Ansprüche 2 bis 9 oder 11,
wobei die Bildanzeigefläche planar ist und
das lichtdurchlässige Abdeckelement (1) ein plattenartiges Element ist, das eine planare erste Fläche aufweist, die der Bildanzeigefläche zugewandt ist.

13. Die elektronische Vorrichtung (100) gemäß irgendeinem der Ansprüche 2 bis 9, 11 oder 12,
wobei das lichtdurchlässige Abdeckelement (1) in einer Draufsicht eine rechteckige Form hat.

14. Die elektronische Vorrichtung (100) gemäß irgendeinem der Ansprüche 2 bis 9 oder 11 bis 13,
wobei die Bildanzeigevorrichtung (52) eine Flüssigkristallanzeigevorrichtung oder eine organische EL-Vorrichtung ist.

15. Die elektronische Vorrichtung (100) gemäß irgendeinem der Ansprüche 2 bis 9 oder 11 bis 14,
ferner aufweisend ein piezoelektrisches Schwingelement (55), das auf dem lichtdurchlässigen Abdeckelement (1) vorgesehen ist.

16. Die elektronische Vorrichtung (100) gemäß Anspruch 15,
wobei das piezoelektrische Schwingelement (55) durch eine Antriebsspannung basierend auf einem Tonsignal in Schwingung versetzt wird.

17. Die elektronische Vorrichtung (100) gemäß einem der Ansprüche 15 oder 16,
wobei das lichtdurchlässige Abdeckelement (1) eine Platte mit einer im Wesentlichen langen rechteckigen Form in einer Draufsicht ist.

18. Die elektronische Vorrichtung (100) gemäß irgendeinem der Ansprüche 15 bis 17,
wobei das piezoelektrische Schwingelement (55) in einer Position angeordnet ist, die nicht mit der Bildanzeigevorrichtung (52) überlappt ist.

19. Ein lichtdurchlässiges Abdeckelement (1) für eine elektronische Vorrichtung (100), aufweisend:
einen Einkristallkörper, der Aluminiumoxid (Al₂O₃) als einen Hauptbestandteil enthält,
wobei der Einkristall mindestens eines von Co, Ni, Na, Ti, Cr, Fe und Cu in einer Gesamtmenge von 3x10⁻⁴ bis 3x10⁻² Masse-% enthält, und
wobei bei dem Einkristallkörper ein Durchschnittswert eines Transmissionsgrades (%) von Licht mit einem Wellenlängenbereich von 230 nm oder mehr und 300 nm oder weniger kleiner als 92 % eines Durchschnittswerts eines Transmissionsgrades (%) von Licht mit einem Wellenlängenbereich von 500 nm oder mehr und 800 nm oder weniger ist.

## Revendications

1. Un élément de recouvrement transmettant la lumière (1) pour un appareil électronique (100), comprenant : un corps monocristallin contenant de l'alumine (Al₂O₃) comme composant principal, dans lequel le monocristal contient au moins un parmi Co, Ni, Na, Ti, Cr, Fe et Cu dans une quantité totale de 3x10⁻⁴ à 3x10⁻² % en masse, et un taux de transmission (%) de lumière du corps monocristallin ayant une longueur d'onde de 260 nm est inférieur à 92% d'un taux de transmission (%) de lumière ayant une longueur d'onde de 550 nm.

2. Un appareil électronique (100), comprenant :
un dispositif d'affichage d'image (52) qui comprend une surface d'affichage d'image (52a) ; et
un élément de recouvrement transmettant la lumière (1) selon la revendication 1, qui est disposé de telle sorte qu'au moins une partie de l'élément de recouvrement transmettant la lumière (1) est tournée vers la surface d'affichage d'image (52a).

3. L'appareil électronique (100) selon la revendication 2,
dans lequel un taux de transmission (%) de lumière du corps monocristallin ayant une longueur d'onde de 260 nm est inférieur à 72 % d'un taux de transmission (%) de lumière ayant une longueur d'onde de 550 nm.

4. L'appareil électronique (100) selon la revendication 2,
dans lequel un taux de transmission (%) de lumière du corps monocristallin ayant une longueur d'onde de 260 nm est inférieur à 50 % d'un taux de transmission (%) de lumière ayant une longueur d'onde de 550 nm.

5. L'appareil électronique (100) selon l'une quelconque des revendications 2 à 4,
dans lequel une valeur moyenne d'un taux de transmission (%) de lumière du corps monocristallin ayant une gamme de longueurs d'onde de 230 nm ou plus et de 300 nm ou moins est inférieure à 92 % d'une valeur moyenne d'un taux de transmission (%) de lumière ayant une gamme de longueurs d'onde de 500 nm ou plus et 800 nm ou moins.

6. L'appareil électronique (100) selon l'une quelconque des revendications 2 à 5,
dans lequel une valeur moyenne d'un taux de transmission (%) de lumière du corps monocristallin ayant une gamme de longueurs d'onde d'environ 230 nm ou plus et 300 nm ou moins est inférieure à 85% d'une valeur moyenne d'un taux de transmission (%) de lumière ayant une gamme de longueurs d'onde d'environ 500 nm ou plus et 800 nm ou moins.

7. L'appareil électronique (100) selon l'une quelconque des revendications 2 à 6,
dans lequel le corps monocristallin contient au moins un parmi Ti, Fe et Cu en une quantité totale de 3x10⁻⁴ % en masse ou plus.

8. L'appareil électronique (100) selon l'un quelconque des revendications 2 à 7,
dans lequel le corps monocristallin contient Cr.

9. L'appareil électronique (100) selon la revendication 8,
qui contient Cr en une quantité de 5x10⁻⁴ % en masse ou plus, et
dans lequel une épaisseur dans une direction perpendiculaire à une première surface (1A) est inférieure à 1 mm.

10. Un élément de recouvrement transmettant la lumière (1) pour un appareil électronique (100), comprenant : un corps monocristallin contenant de l'alumine (Al₂O₃) comme composant principal, le rapport de contenu d'oxygène de l'alumine étant inférieur à un équivalent chimique, et un taux de transmission (%) de lumière du corps monocristallin ayant une longueur d'onde de 260 nm étant inférieur à 92% d'un taux de transmission (%) de lumière ayant une longueur d'onde de 550 nm.

11. Un appareil électronique (100), comprenant :
un dispositif d'affichage d'image (52) qui comprend une surface d'affichage d'image ; et
un élément de recouvrement transmettant la lumière (1) selon la revendication 10, qui est disposé de telle sorte qu'au moins une partie de l'élément de recouvrement transmettant la lumière (1) est tournée vers la surface d'affichage d'image.

12. L'appareil électronique (100) selon l'une quelconque des revendications 2 à 9 ou 11,
dans lequel la surface d'affichage d'image est plane, et
l'élément de recouvrement transmettant la lumière (1) est un élément en forme de plaque qui comprend une première surface plane tournée vers la surface d'affichage d'image.

13. L'appareil électronique (100) selon l'une quelconque des revendications 2 à 9, 11 ou 12,
dans lequel l'élément de recouvrement transmettant la lumière (1) présente une forme rectangulaire dans une vue en plan.

14. L'appareil électronique (100) selon l'une quelconque des revendications 2 à 9 ou 11 à 13,
dans lequel le dispositif d'affichage d'image (52) est un dispositif d'affichage à cristaux liquides ou un dispositif EL organique.

15. L'appareil électronique (100) selon l'une quelconque des revendications 2 à 9 ou 11 à 14,
comprenant en outre un élément vibrant piézoélectrique (55) prévu sur l'élément de recouvrement transmettant la lumière (1).

16. L'appareil électronique (100) selon la revendication 15,
dans lequel l'élément vibrant piézoélectrique (55) est mis en vibration par une tension de commande basée sur un signal sonore.

17. L'appareil électronique (100) selon l'une des revendications 15 ou 16,
dans lequel l'élément de recouvrement transmettant la lumière (1) est une plaque présentant une forme rectangulaire sensiblement longue dans une vue en plan.

18. L'appareil électronique (100) selon l'une quelconque des revendications 15 à 17,
dans lequel l'élément vibrant piézoélectrique (55) est disposé dans une position qui ne se chevauche pas avec le dispositif d'affichage d'image (52).

19. Un élément de recouvrement transmettant la lumière (1) pour un appareil électronique (100), comprenant :
un corps monocristallin contenant de l'alumine (Al₂O₃) comme composant principal,
dans lequel le monocristal contient au moins l'un parmi Co, Ni, Na, Ti, Cr, Fe et Cu en une quantité totale de 3x10⁻⁴ à 3x10⁻² % en masse, et
une valeur moyenne d'un taux de transmission (%) de lumière du corps monocristallin ayant une gamme de longueurs d'onde de 230 nm ou plus et de 300 nm ou moins est inférieure à 92 % d'une valeur moyenne d'un taux de transmission (%) de lumière ayant une gamme de longueurs d'onde de 500 nm ou plus et 800 nm ou moins.
